## Europäisches Patentamt

## European Patent Office

## Office européen des brevets

(19)

(11) Veröffentlichungsnummer: **0 092 668**
**B1**

(12) **EUROPÄISCHE PATENTSCHRIFT**

(45) Veröffentlichungstag der Patentschrift:
**27.08.86**

(21) Anmeldenummer: **83102395.7**

(22) Anmeldetag: **11.03.83**

(51) Int. Cl.⁴: **F 16 B 7/08**

(54) **Vorrichtung zum lösbaren Verbinden eines Gestellelements mit einem Gestellbauteil.**

(30) Priorität: **22.04.82 DE 3215018**

(43) Veröffentlichungstag der Anmeldung:
**02.11.83 Patentblatt 83/44**

(45) Bekanntmachung des Hinweises auf die Patenterteilung:
**27.08.86 Patentblatt 86/35**

(84) Benannte Vertragsstaaten:
**AT BE CH DE FR GB IT LI LU NL SE**

(56) Entgegenhaltungen:
**DE - A - 1 625 397**
**DE - A - 3 028 890**
**DE - B - 1 296 897**
**DE - B - 2 855 632**
**DE - C - 1 104 765**
**FR - A - 1 130 408**
**FR - A - 2 094 231**
**US - A - 3 424 420**
**US - A - 3 574 367**

(73) Patentinhaber: **Küttenbaum, Valentin, Ringelhauser Allee 14, D-7958 Laupheim (DE)**

(72) Erfinder: **Küttenbaum, Valentin, Ringelhauser Allee 14, D-7958 Laupheim (DE)**

(74) Vertreter: **Fay, Hermann, Dipl.-Phys. Dr., Ensingerstrasse 21 Postfach 1767, D-7900 Ulm (Donau) (DE)**

## Beschreibung

Die Erfindung betrifft eine Vorrichtung zum lösbaren Verbinden eines Gestellelementes mit einem Gestellbauteil, wobei die Vorrichtung eine Aufnahme für das Gestellelement besitzt, die von zwei Spannbacken gebildet ist, die Spannmittel besitzen, die eine Einklemmung des Gestellelements in der Aufnahme bewirken, ferner an zwei sich gegenüberliegenden Stellen der Aufnahme durch einen Trennschlitz voneinander geteilt sind und auf der einen Seite der Aufnahme durch die Spannmittel und auf der anderen Seite durch eine den Anschluss zum Gestellbauteil bildende Brücke verbunden sind, wobei die Spannbacken an ihrem der Brücke zugekehrten Ende vom Trennschlitz abgewandte Vorsprünge aufweisen und die Brücke an ihren Enden die Vorsprünge umgreifende Haken besitzt.

Derartige Vorrichtungen ermöglichen beispielsweise das Verbinden zweier oder mehrerer Gestellelemente im Gestell- oder Gerüstbau. Insbesondere erlauben sie den Aufbau individuell gestalteter Gestelle, die beispielsweise im Wohn- oder Bürobereich Anwendung finden können. Die Gestelle lassen sich auch nachträglich leicht in ihrer Gestalt verändern, indem die Vorrichtungen von den Gestellelementen gelöst werden und anschliessend das Gestell in geänderter Anordnung der Gestellelemente wieder aufgebaut wird.

Bei einer aus der DE-A 1 625 397 bekannten Vorrichtung dieser Art besitzen das Gestellteil und die Aufnahme einen ovalen Querschnitt, wobei der Querschnitt der Aufnahme etwas grösser als der des Gestellelements ist, so dass kein Formschluss zwischen den Umfangsflächen des Gestellelements und der Aufnahme erfolgt. Soweit in Achsenrichtung der Aufnahme zwei der Vorrichtungen mit ihren Aufnahmen koaxial nebeneinander angeordnet sind, ist für beide Vorrichtungen eine gemeinsame, die Vorrichtungen miteinander verbindende Brücke vorgesehen. Abgesehen hiervon erfolgt aber der Anschluss weiterer Gestellelemente oder Gestellbauteile an den Spannbacken und/oder mit Hilfe der Spannmittel, so dass die Spannbacken bzw. Spannmittel den jeweils anzuschliessenden weiteren Gestellelementen oder Gestellbauteilen speziell angepasst sein müssen.

Bei einer weiteren aus der FR-A 1 130 408 bekannten Vorrichtung der eingangs genannten Art besitzen zwar das Gestellelement und die Aufnahme kreisrunden Querschnitt gleicher Grösse und stehen somit miteinander im Formschluss, jedoch bilden die Spannbacken zwei formschlüssige Aufnahmen für je ein Gestellelement und die Spannmittel sind zwischen beiden Aufnahmen angeordnet. Werden die Spannmittel angezogen, bewegen sich die beiderseits der Spannmittel gleicherweise an den Gestellelementen anliegenden Spannbacken gegeneinander, und dies gilt auch für ihre Vorsprünge, die daher nicht gegen die sie übergreifenden Haken der Brücke verklemmt werden können. Die Brücke besitzt eine eigene Aufnahme für ein weiteres Gestellelement und kann erst mit ihren Haken über die Vorsprünge der Spannbacken geschoben werden, wenn letztere schon fertig gegeneinander verspannt sind. Die Halterung der Brücke in Richtung ihres Aufschiebens erfolgt dann allein durch die Anlage von an der Brücke vorgesehenen Anschlägen an den Spannbacken, während gleichzeitig das in der Aufnahme der Brücke befindliche Gestellelement über in Richtung des Aufschiebens an den Vorsprüngen verlaufende keilartige Rampen verklemmt wird.

Der Erfindung liegt die Aufgabe zugrunde, eine Vorrichtung der eingangs genannten Art so auszubilden, dass sie bei einfacher Gestalt und vielseitiger Verwendbarkeit das gleichzeitige sichere Verklemmen des Gestellelements und des Gestellbauteils allein mit Hilfe der Spannmittel an den Spannbacken ermöglicht.

Diese Aufgabe wird nach der Erfindung dadurch gelöst, dass das Gestellelement mit im wesentlichen kreisförmigem Querschnitt formschlüssig in der Aufnahme angeordnet ist, und dass die Brücke zwei Klammerteile verbindet, die zwischen sich eine Aufnahme zum Einklemmen des Gestellbauteils bilden, wobei die Klammerteile auf der den Haken abgewandten Seite der Brücke liegen und im wesentlichen starr mit je einem der Haken verbunden sind, so dass die beiden Klammerteile unter der Kraft der an den Haken abgestützten Spannbackenvorsprünge im Sinne einer Verengung der Aufnahme gegeneinander verstellbar sind.

Dabei ist es zweckmässig, dass die Brücke und die durch sie verbundenen Klammerteile einstückig miteinander ausgebildet sind und die Brücke zur Verstellung der Aufnahme elastisch biegbar ist. Es ist weiter von Vorteil, wenn die Klammerteile wie die Haken ausgebildet sind, so dass die Klammerteile selbst wieder den Anschluss weiterer Spannbackenpaare ermöglichen.

Zweckmässigerweise ist das Spannbackenpaar im Bereich des den Vorsprüngen zugewandten Trennschlitzes durch elastische Verbindungsmittel miteinander verbunden. Das Spannbackenpaar bildet somit auch im von dem Gestellelement gelösten Zustand eine Einheit, und kann dadurch insbesondere auch einfacher montiert werden.

Eine andere Ausführungsform der Erfindung ist dadurch gekennzeichnet, dass die zwei Klammerteile und die von ihnen gebildete Aufnahme dadurch ersetzt sind, dass die Brücke elastisch biegbar ist und etwa mittig einen Zugbolzen trägt, der auf der von den Spannbacken abgewandten Seite der Brücke vorsteht und zum zugfesten Anschluss an einem anderen Gestellbauteil, einer starren Wand oder dergl. eingerichtet ist. Zweckmässig ist der Zugbolzen eine in eine Öffnung der Brücke drehbar eingesetzte Schraube. Mit einer derart gestalteten Brücke lässt sich in einfacher Weise ein Anschluss des Gestellelements verwirklichen, der bei in den Spannbacken noch losem Gestellelement um den Zugbolzen als Achse gelenkig ist, diese Gelenkigkeit aber selbsttätig verliert, wenn das Gestellelement zwischen den Spannbacken mit den Spannmitteln festgezogen wird. In diesem Fall versucht nämlich die von den Vorsprüngen an den Spannbacken auf die Haken ausgeübte Kraft die Brücke in Richtung auf die Spannbacken hin konvex durchzubiegen. Dies wird durch den am anderen Gestellbauteil, der Wand oder dergl. angeschlossenen Zugbolzen aufgefangen, so dass sich die Brücke infolge ihrer wenn auch nur sehr geringfügigen Verformung am anderen Gestellbauteil, der Wand oder dergl. verspannt, also eine Drehung der Brücke um den Zugbolzen wie bei unbelasteter Brücke nicht mehr möglich ist.

Im folgenden wird die Erfindung an in der Zeichnung dargestellten Ausführungsbeispielen näher erläutert; es zeigen:

Fig. 1 eine Seitenansicht, teils im Schnitt der Vorrichtung mit eingespanntem Gestellbauteil, jedoch ohne Gestellelement, und zwar in den Teilfig. 1a) bis 1c) mit Gestellbauteilen unterschiedlichen Querschnitts,

Fig. 2 eine untereinander rechtwinklige Verbindung zweier rohrförmiger Gestellelemente mit Vorrichtungen entsprechend Fig. 1a) bis 1c),

Fig. 3 eine andere Ausführungsform der Vorrichtung in einer der Fig. 1 entsprechenden Darstellung.

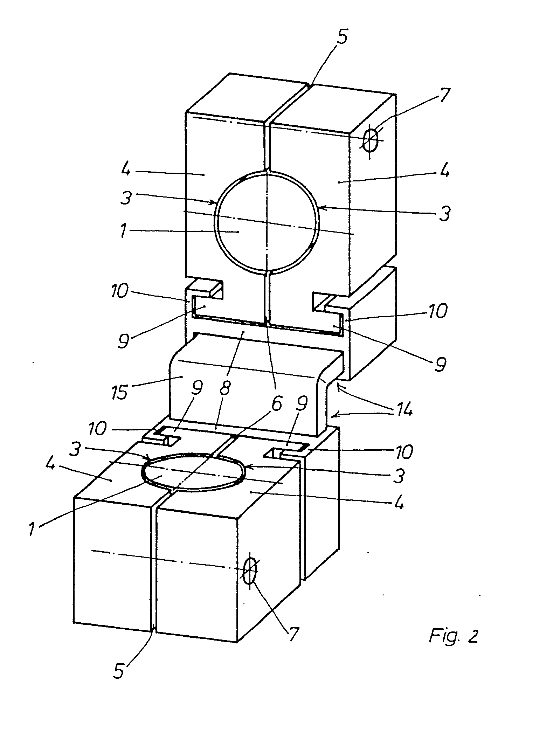

Die in der Zeichnung dargestellten Vorrichtungen ermöglichen eine lösbare Verbindung eines nur in Fig. 2 angedeuteten Gestellelementes 1 von im wesentlichen kreisförmigem Querschnitt mit einem Gestellbauteil 13, 15, 18. Die Vorrichtungen besitzen eine formschlüssige Aufnahme 3 für das Gestellelement 1, die von zwei Spannbacken 4 gebildet ist. An zwei sich gegenüberliegenden Stellen der Aufnahme 3 sind die Spannbacken 4 voneinander durch einen Trennschlitz 5, 6 geteilt. Auf der einen Seite der Aufnahme 3 am Trennschlitz 5 sind Spannmittel 7 vorgesehen, die eine Einklemmung des Gestellelementes 1 in der Aufnahme 3 bewirken. Auf der anderen Seite der Aufnahme 3 am Trennschlitz 6 sind die Spannbacken 4 durch eine Brücke 8 verbunden, die den Anschluss zu den Gestellbauteilen bildet. Die Spannbacken 4 weisen an ihrem der Brücke 8 zugekehrten Ende vom Trennschlitz 6 abgewandte Vorsprünge 9 auf, die von an den Enden der Brücke vorgesehenen Haken 10 umgriffen werden.

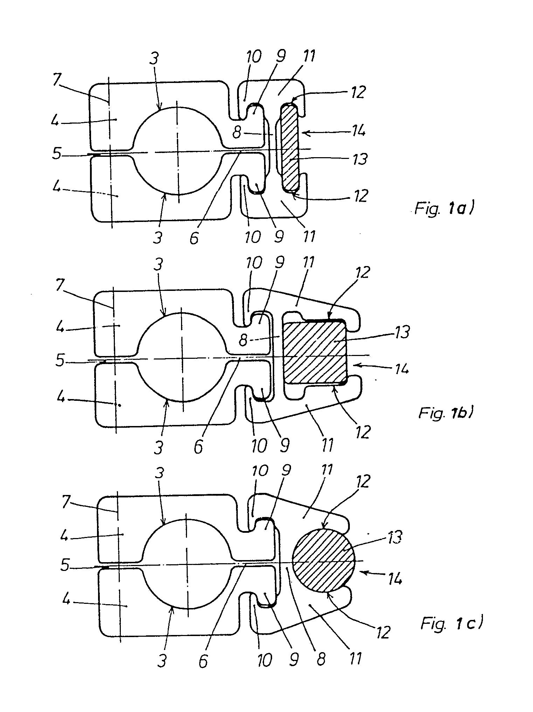

In Fig. 1 und 2 verbindet die Brücke 8 zwei Klammerteile 11, die zwischen sich eine Aufnahme 14 zum Einklemmen des Gestellbauteils 13, 15 bilden. Die Klammerteile 11 liegen auf der den Haken 10 abgewandten Seite der Brücke 8 und sind im wesentlichen starr mit je einem der Haken 10 verbunden. Dadurch sind die beiden Klammerteile 11 unter der Kraft der an den Haken 10 abgestützten Spannbackenvorsprünge 9 im Sinne einer Verengung der Aufnahme 14 gegeneinander verstellbar, wodurch das Einklemmen des Gestellbauteils 13, 15 in der Aufnahme 14 erfolgt, wenn die Spannmittel 7 angezogen werden. Die Brücke 8 und die durch sie verbundenen Klammerteile 11 sind einstückig miteinander ausgebildet, wobei die Brücke 8 zur Verstellung der Klammeraufnahme 14 elastisch biegbar ist. Die Klammerteile 11 besitzen dem Querschnitt der Gestellbauteile 13, 15 angepasste Klemmflächen 12, die ein formschlüssiges Einspannen der Gestellbauteile 13, 15 ermöglichen. Soweit, wie in Fig. 1a), die Klammerteile 11 wie die Haken 10 ausgebildet sind, kann zwischen den Klammerteilen 11 statt des Gestellbauteils 13 auch ein weiteres Spannbackenpaar 4 mit seinen Vorsprüngen 9 eingespannt werden, so dass zwei rohrförmige Gestellelemente 1 miteinander verbunden werden können. Eine ebenfalls rechtwinklige Verbindung zweier rohrförmiger Gestellelemente 1 lässt sich auch in der Anordnung nach Fig. 2 verwirklichen, indem zwei jeweils mit einer Aufnahme 1 versehene Spannbackenpaare 4 über ein in den Aufnahmen 14 eingespanntes, als Winkelstück ausgebildetes Gestellbauteil 15 miteinander verbunden werden.

Um jeweils ein Spannbackenpaar 4 auch im von dem Gestellelement gelösten Zustand zusammenzuhalten, kann das Spannbackenpaar im Bereich des Trennschlitzes 6 durch in der Zeichnung nicht dargestellte elastische Verbindungsmittel miteinander verbunden sein.

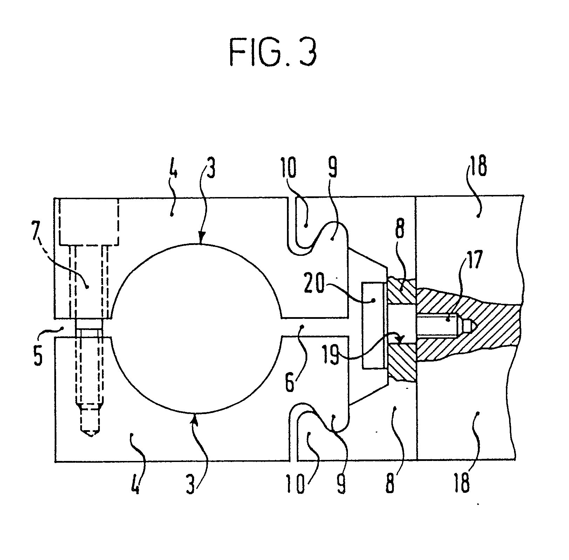

Bei der in Fig. 3 dargestellten Ausführungsform ist die Brücke 8 elastisch biegbar und etwa mittig an einen Zugbolzen 17 angeschlossen, der auf der von den Spannbacken 4 abgewandten Seite der Brücke 8 vorsteht und dort zugfest an ein anderes Gestellbauteil angeschlossen ist, das insbesondere auch eine zweite Brücke sein kann, so dass sich dann ein zur Berührungsebene der Brücke 8 und dem Gestellbauteil 18 spiegelsymmetrischer Aufbau der Gestellverbindung ergeben würde. Das Gestellbauteil 18 kann aber auch beispielsweise durch eine starre Wand ersetzt sein. Wie im einzelnen aber auch immer das Teil 18 gestaltet sein mag, in jedem Fall können bei zunächst noch losen oder zumindest nicht fest angezogenen Spannmitteln 7 die Brücke 8 mit den Spannbacken 4 und das in deren Aufnahme 3 befindliche, in Fig. 3 nicht dargestellte Gestellelement um die Achse des Zugbolzens 17 gelenkig gedreht werden, wenn der Zugbolzen 17 in der Brücke 9 und/oder im Teil 18 drehbar ist, wenn also beispielsweise der Zugbolzen 17 der Gewindeschaft einer Schraube 20 ist, die mit ihrem Kopf versenkt und drehbar in eine Öffnung 19 der Brücke 8 eingesetzt ist.

Werden die Spannmittel 7 angezogen, so spreizen die Vorsprünge 9 auseinander und die von ihnen auf die Haken 10 ausgeübte Kraft versucht die Brücke 8 in Richtung zu den Spannbacken 4 hin konvex durchzuwölben, was durch den Zugbolzen 17 aufgefangen wird und im Ergebnis zu einer Verspannung der Brücke 8 am Teil 18 führt, die jede weitere Drehung der Brücke 8 gegenüber dem Teil 18 ausschliesst. Durch erneutes Lockern der Spannmittel 7 wird die Gelenkigkeit wieder erreicht.

In der Zeichnung ist der Einfachheit wegen ausnahmslos der Fall dargestellt, dass die Haken 10 auf den Vorsprüngen 9 und dadurch die Brükke 8 an den Spannbacken 4 in Richtung der Achse der von den Spannbacken 4 gebildeten Aufnahme 3 verschiebbar sind. Selbstverständlich besteht aber auch die Möglichkeit, dass die Haken 10 in Richtung parallel zur Achse der Aufnahme 3 mit den Vorsprüngen 9 in einem formschlüssigen Eingriff stehen, so dass die Brücke 8 auch in dieser Richtung nicht von den Spannbacken 4 abrutschen kann. Dieser Formschluss lässt sich auf vielfache Weise durch passende Formgebung der aneinanderliegenden Flächen von jeweils Haken 10 und Vorsprung 9 verwirklichen. So können diese Flächen in einem zur Ebene der Aufnahme 3 senkrechten und zur Achse der Aufnahme 3 parallelen Querschnitt beispielsweise konvex oder konkav gewölbt oder durch Rillen nach Massgabe des jeweiligen Rillenprofiles profiliert, beispielsweise gewellt sein. Es besteht auch die Möglichkeit, diese Flächen an den sich gegenüberstehenden Vorsprüngen und Haken eines Backenpaares bzw. eine Brücke als koaxiale Zylinderflächen auszubilden, so dass die Brücke 8 über einen kleinen Schwenkbereich den Ausgleich von Toleranzen ermöglicht.

## Patentansprüche

1. Vorrichtung zum lösbaren Verbinden eines Gestellelementes (1) mit einem Gestellbauteil (13, 15, 18), wobei die Vorrichtung eine Aufnahme (3) für das Gestellelement (1) besitzt, die von zwei Spannbacken (4) gebildet ist, die Spannmittel (7) besitzen, die eine Einklemmung des Gestellelements (1) in der Aufnahme (3) bewirken, ferner an zwei sich gegenüberliegenden Stellen der Aufnahme (3) durch einen Trennschlitz (5, 6) voneinander geteilt sind und auf der einen Seite der Aufnahme (3) durch die Spannmittel (7) und auf der anderen Seite durch eine den Anschluss zum Gestellbauteil (2) bildende Brücke (8) verbunden sind, wobei die Spannbacken (4) an ihrem der Brücke (8) zugekehrten Ende vom Trennschlitz (6) abgewandte Vorsprünge (9) aufweisen und die Brücke (8) an ihren Enden die Vorsprünge (9) umgreifende Haken (10) besitzt, dadurch gekennzeichnet, dass das Gestellelement (1) mit im wesentlichen kreisförmigem Querschnitt formschlüssig in der Aufnahme (3) angeordnet ist, und dass die Brücke (8) zwei Klammerteile (11) verbindet, die zwischen sich eine Aufnahme (14) zum Einklemmen des Gestellbauteils (13, 15) bilden, wobei die Klammerteile (11) auf der den Haken (10) abgewandten Seite der Brücke (8) liegen und im wesentlichen starr mit je einem der Haken (10) verbunden sind, so dass die beiden Klammerteile (11) unter der Kraft der an den Haken (10) abgestützten Spannbackenvorsprünge (9) im Sinne einer Verengung der Aufnahme (14) gegeneinander verstellbar sind.

2. Vorrichtung nach Anspruch 1, dadurch gekennzeichnet, dass die Brücke (8) und die durch sie verbundenen Klammerteile (11) einstückig miteinander ausgebildet sind und die Brücke (8) zur Verstellung der Aufnahme (14) elastisch biegbar ist.

3. Vorrichtung nach Anspruch 1 oder 2, dadurch gekennzeichnet, dass die Klammerteile (11) wie die Haken (10) ausgebildet sind.

4. Vorrichtung nach einem der Ansprüche 1 bis 3, dadurch gekennzeichnet, dass das Spannbackenpaar (4) im Bereich des den Vorsprüngen (9) zugewandten Trennschlitzes (6) durch elastische Verbindungsmittel (16) miteinander verbunden sind.

5. Vorrichtung nach Anspruch 1, dadurch gekennzeichnet, dass die zwei Klammerteile (11) und die von ihnen gebildete Aufnahme (14) dadurch ersetzt sind, dass die Brücke (8) elastisch biegbar ist und etwa mittig einen Zugbolzen (17) trägt, der auf der von den Spannbacken (4) abgewandten Seite der Brücke (8) vorsteht und zum zugfesten Anschluss an einem anderen Gestellbauteil (18), einer starren Wand oder dergl. eingerichtet ist.

6. Vorrichtung nach Anspruch 5, dadurch gekennzeichnet, dass der Zugbolzen (17) eine in eine Öffnung (19) der Brücke (8) drehbar eingesetzte Schraube (20) ist.

7. Vorrichtung nach einem der Ansprüche 1 bis 6, dadurch gekennzeichnet, dass die Haken (10) in Richtung parallel zur Achse der Aufnahme (3) im formschlüssigen Eingriff mit den Vorsprüngen (9) stehen, so dass in dieser Richtung die Brücke (8) nicht von den Spannbacken (4) abrutschen kann.

## Claims

1. A device for releasably connecting a frame element (1) to a frame component (13, 15, 18), wherein the device has a receiving means (3) for the frame element (1), which is formed by two clamping jaws (4) which have clamping means (7) which provide for clamping of the frame element (1) in the receiving means (3), which are also divided from each other by a separating slot (5, 6) at two mutually oppositely disposed locations of the receiving means (3) and which are connected on one side of the receiving means (3) by the clamping means (7) and on the other side by a bridge (8) which forms the connection to the frame component (2), wherein at their ends which are towards the bridge (8) the clamping jaws (4) have projections (9) which face away from the separating slot (6) and at its ends the bridge (8) has hooks (10) engaging around the projections (9) characterised in that the frame element (1), of substantially circular cross-section, is disposed positively in the receiving means (3) and that the bridge (8) connects two clamp portions (11) which form between them a receiving means (14) for clamping of the frame component (13, 15) therein, wherein the clamp portions (11) are disposed on the side of the bridge (8) which is remote from the hooks (10) and are substantially rigidly connected to respective ones of the hooks (10) so that the two clamp portions (11) are displaceable towards each other under the force of the clamping jaw projections (9) which are supported on the hooks (10), to produce a reduction in the size of the receiving means (14).

2. A device according to claim 1 characterised in that the bridge (8) and the clamp portions (11) connected thereby are formed in one piece with each other and the bridge (8) is elastically bendable for the purposes of adjustment of the receiving means (14).

3. A device according to claim 1 or claim 2 characterised in that the clamp portions (11) are like the hooks (10).

4. A device according to one of claims 1 to 3 characterised in that the pair of clamping jaws (4) are connected together by elastic connecting means (16) in the region of the separating slot (6) which is towards the projections (9).

5. A device according to claim 1 characterised in that the two clamp portions (11) and the receiving means (14) formed thereby are replaced by the bridge (8) being elastically bendable and approximately centrally carrying a tie bolt (17) which projects on the side of the bridge (8) remote from the clamping jaws (4) and which is arranged for connection in such a way as to resist tensile forces to another frame component (18), a rigid wall of the like.

6. A device according to claim 5 characterised in that the tie bolt (17) is a screw (20) which can be rotatably fitted into an opening (19) in the bridge (8).

7. A device according to one of claims 1 to 6 characterised in that the hooks (10) are in form-locking engagement with the projections (9), in a direction parallel to the axis of the receiving means (3), so that the bridge (8) cannot slip off the clamping jaws (4) in said direction.

## Revendications

1. Dispositif pour relier de façon amovible un élément (1) d'une structure à un composant (13, 15, 18) de la structure, dans lequel le dispositif comporte un logement (3) pour l'élément de structure (1), qui est formé par deux mâchoires de serrage (4) qui possèdent des moyens de serrage (7) réalisant le serrage de l'élément de structure (1) dans le logement (3), sont séparés en outre l'un de l'autre en deux emplacements, réciproquement opposés, du logement (3) par une fente de séparation (5, 6) et sont reliés, d'un côté du logement (3), par les moyens de serrage (7) et, de l'autre côté, par un étrier (8) formant le raccordement avec le composant (2) de la structure, les mâchoires de serrage (4) possédant sur leur extrémité tournée vers l'étrier (8), des parties saillantes (9) tournées à l'opposé de la fente de séparation (6), et l'étrier (8) comportant sur ses extrémités des crochets (10) enserrant les parties saillantes (9), caractérisé en ce que l'élément de structure (1) s'insère, selon une liaison par formes complémentaires, par sa section transversale essentiellement circulaire dans le logement (3), et que l'étrier (8) relie deux éléments formant pince (11), qui forment un logement (14) utilisé pour le serrage du composant (13, 15) de la structure, auquel cas les éléments formant pince (11) sont situés sur le côté de l'étrier (8), tourné à l'opposé du crochet (10) et sont reliés essentiellement rigidement avec chacun des crochets (10) de telle sorte que les deux éléments formant pince (11) sont déplaçables l'un par rapport à l'autre dans le sens d'un rétrécissement du logement (14), sous l'action de la force des parties saillantes (9) des mâchoires de serrage, qui sont en appui contre les crochets (10).

2. Dispositif selon la revendication 1, caractérisé en ce que l'étrier (8) et les éléments formant pince (11), qui sont reliés par cet étrier, sont réalisés d'un seul tenant et que l'étrier (8) peut être fléchi élastiquement pour permettre le déplacement du logement (14).

3. Dispositif selon la revendication 1 ou 2, caractérisé en ce que les éléments formant pince (11) sont réalisés comme les crochets (10).

4. Dispositif selon l'une des revendications 1 à 3, caractérisé en ce que les deux mâchoires de serrage (4) sont reliées entre elles, au niveau de la fente de séparation (6) tournée vers les parties saillantes (9), par des moyens élastiques de liaison (16).

5. Dispositif selon la revendication 1, caractérisé en ce que les deux éléments formant pince (11) et le logement (14) qu'ils forment sont remplacés par le fait que l'étrier (8) peut fléchir élastiquement et porte, approximativement en son centre, un tirant (17) qui fait saillie sur le côté de l'étrier (8) tourné à l'opposé des mâchoires de serrage (4) et est agencé de manière à réaliser le raccordement, résistant à la traction, à un autre composant (18) de la structure à une paroi rigide ou analogue.

6. Dispositif selon la revendication 5, caractérisé en ce que le tirant (17) est une vis insérée de manière à pouvoir tourner dans une ouverture (19) de l'étrier (8).

7. Dispositif selon l'une des revendications 1 à 6, caractérisé en ce que les crochets (10) sont en prise, selon une liaison par formes complémentaires, avec les parties saillantes (9), dans une direction parallèle à l'axe du logement (3), de telle sorte que, dans cette direction, l'étrier (8) ne peut pas sortir en glissant hors des mâchoires de serrage (4).

Fig. 1a)

Fig. 1b)

Fig. 1c)

Fig. 2

# FIG. 3